# EUROPEAN PATENT APPLICATION

(11) **EP 4 187 030 A1**
(43) Date of publication of application: **31.05.2023**
(21) Application number: 22209520.0
(22) Date of filing: 25.11.2022
(51) Int. Cl.: E03B 7/07, E03D 1/00, G01M 3/00

(54) **METHOD AND SYSTEM FOR DETECTING A LEAKAGE FLOW OF A TOILET**

(30) Priority: 26.11.2021 DK PA202101127
(71) Applicant: Brunata A/S, 2730 Herlev (DK)
(72) Inventor: Jensen, Andreas, 2730 Herlev (DK)
(74) Representative: Andreasen, Søren Laursen Vasegaard

(57) **Abstract**

A system (20) for detecting a leakage flow (22) of a toilet (4) having a water cistern (10) and an inlet pipe (6) that is in fluid communication with the water cistern (10) is disclosed. The system (20) comprises:
- a vibration sensor (2) arranged in a position, in which the vibration sensor (2) can detect vibration signals (30, 30') caused by water flowing through the inlet pipe (6) or through the water cistern (10);
- a computer unit (24) arranged and configured to receive data from the vibration sensor (2), wherein the computer unit (24) is configured to determine when no vibration amplitude (A) below a predefined amplitude level (A_{L}) has been detected by the vibration sensor (2) in a predefined time period (ΔT).

## Description

### Field of invention

The present invention relates to a method and system for detecting a leakage flow of a toilet.

### Prior art

The presence of a leakage flow of a toilet represents a loss of resources and an economic loss. A leakage flow from a toilet can be detected in two general ways. The first is by detecting the water that escapes the water cistern. The second is by detecting certain leak-related properties such as temperature changes in an inlet pipe, pressure drops in the water cistern or vibration caused by the leakage flow.

If vibration is used to detect a leakage flow one must consider that when a leakage flow is present, the leakage flow generates a vibration that propagates through the material of the inlet pipe and the water cistern, through the fluid in the inlet pipe and the water cistern, and through the media that is adjacent to the inlet pipe and the water cistern. The vibration caused by a leakage flow in a toilet and the inlet pipe acoustic characteristics greatly depend on the dimensions and material of the inlet pipe and the water cistern. If the inlet pipe is surrounded by an insulation material, the transmission characteristics also depend on the insulation by which the inlet pipe is surrounded.

It is known that certain frequencies are indicative of water leakage in a pipe system. Acoustic methods are often used in leak detection and pipe inspection in water systems. In these methods, Piezo-electric vibration detectors, or accelerometers, are typically placed at one or more locations in the water system on pipes, the ground or on walls.

Since a toilet is normally used on a daily basis, a flow from the water cistern is not critical as long as the flow is associated with the normal use of the toilet. A flow sensor cannot determine if a flow is associated with a daily use or if the flow is a leakage flow. A flow sensor can only detect if there is a flow.

US 9911307 B1 discloses a water leak alarm assembly and a method for identifying a water leak in a toilet includes a first housing that is mounted to a tank of a toilet. An alert unit is positioned within the first housing and the alert unit selectively generates an audible alarm. A second housing is provided and the second housing is positioned on a fluid supply line on the toilet. A detection unit is positioned within the second housing to detect the sound of water flowing through the fluid supply line. The detection unit is electrically coupled to the alert unit. The alert unit emits the audible alarm when the detection unit detects the sound of water flowing through the fluid supply line for a duration of time that exceeds a trigger duration of time. Using this solution, however, introduces the risk of generating a false alarm if the sound level in the area surrounding the toilet is above a certain level. Accordingly, it would be desirable to be able to provide an alternative solution by which this disadvantage can be avoided.

Accordingly, there is a need for a method and a system that is capable of detecting a leakage flow of a toilet that is installed and being used on a regular basis and in which the disadvantage of the prior art solutions can be avoided.

### Summary of the invention

The object of the present invention can be achieved by a system as defined in claim 1 and by a method as defined in claim 9. Preferred embodiments are defined in the dependent subclaims, explained in the following description and illustrated in the accompanying drawings.

The system according to the invention is a system for detecting a leakage flow of a toilet having a water cistern and an inlet pipe that is in fluid communication with the water cistern, wherein the system comprises:
- a vibration sensor arranged in a position, in which the vibration sensor can detect vibration signals caused by water flowing through the inlet pipe or through the water cistern;
- a computer unit arranged and configured to receive data from the vibration sensor,
wherein the computer unit is configured to determine when no vibration amplitude below a predefined amplitude level has been detected by the vibration sensor in a predefined time period.

Hereby, it is possible to provide a system that is capable of detecting a leakage flow of a toilet that is installed and being used on a regular basis. Moreover, the disadvantage of the prior art solutions can be avoided.

The system is configured for detecting a leakage flow of a toilet having a water cistern and an inlet pipe that is in fluid communication with the water cistern. When a leakage flow is present, there will be a flow out of the toilet. Accordingly, a flow through the inlet pipe can be detected. Likewise, a flow through the water cistern can be detected.

The vibration sensor is arranged in a position, in which the vibration sensor can detect vibration signals cause by water flowing through the inlet pipe or through the water cistern.

In one embodiment, the vibration sensor is attached to the inlet pipe or to a structure attached to the inlet pipe.

In one embodiment, the vibration sensor is attached to the water cistern or to a structure attached to the water cistern.

In one embodiment, the vibration sensor is attached to a supply pipe that is in fluid communication with the inlet pipe or to a structure attached to the supply pipe.

The vibration sensor may be any type of sensor that is capable of detecting vibrations.

In one embodiment, the vibration sensor comprises an accelerometer.

In one embodiment, the vibration sensor comprises a single-axis accelerometer.

In one embodiment, the vibration sensor comprises a two-axis accelerometer.

In one embodiment, the vibration sensor comprises a three-axis accelerometer.

In one embodiment, the vibration sensor comprises one or more piezoelectric accelerometers configured to sense vibration.

The computer unit is arranged and configured to receive data from the vibration sensor. The computer unit may comprise a Central Processing Unit (CPU).

In one embodiment, the computer unit comprises a central processing unit (microprocessor) contained in a single integrated circuit.

The computer unit is configured to determine when no vibration amplitude below a predefined amplitude level has been detected by the vibration sensor in a predefined time period.

In one embodiment, the vibration amplitude is a single value measured a single time.

In one embodiment, the vibration amplitude is a sum of singular vibration amplitudes integrated during a period of predefined duration (e.g. 1 minute).

In one embodiment, signal filtration is applied either before the computer unit receives signals or after the signals have been received by the computer unit.

In one embodiment, the computer unit is integrated within the sensor.

In one embodiment, the computer unit is separated from the sensor

In one embodiment, the system applies a predefined time period that depends on the time. Accordingly, there is a diurnal variation with respect to the predefined time period. In one embodiment, the predefined time period has a first value during the opening hours of a building and a second predefined time period value during the remaining hours (the closing hours of a building).

In one embodiment, the vibration sensor comprises a communication module configured to transmit signals to an external receiver.

In one embodiment, the vibration sensor comprises a communication module configured to transmit wireless signals to an external receiver.

In one embodiment, the communication module comprises a radio transmitter.

In one embodiment, the communication module is configured to communicate by using a low-power wide-area network modulation technique.

In one embodiment, the communication module is configured to communicate by using a low power wide area network.

In one embodiment, the communication module is reliable and compliant with the so-called LoRaWAN^{®} specification. LoRaWAN is managed by the LoRa Alliance as an open standard, which includes a large number of network operators globally.

In one embodiment, the communication module comprises a radio-frequency module that is configured to transmit and optionally receive radio signals.

In one embodiment, the communication module is a long range communication module configured to apply a spread spectrum modulation technique derived from chirp spread spectrum technology.

In one embodiment, the vibration sensor comprises a satellite-based radio navigation unit. Hereby, the position of the vibration sensor can be included in the signals sent by the vibration sensor.

In one embodiment, the satellite-based radio navigation is the global navigation satellite systems (GNSS) or another navigation satellite systems that provides geolocation and time information to the satellite-based radio navigation unit.

In one embodiment, the vibration sensor comprises a unique identification that is linked to the position of the toilet to which the vibration sensor is installed. Hereby, the position of the toilet can be established on the basis of the signals sent by the vibration sensor.

In one embodiment, the predefined amplitude level corresponds to a flow of 5-1000 ml/min through the inlet pipe. It has been found that these values are realistic and practical to use.

In one embodiment, the predefined amplitude level corresponds to a flow of 10-500 ml/min through the inlet pipe.

In one embodiment, the predefined amplitude level corresponds to a flow of 15-300 ml/min through the inlet pipe.

In one embodiment, the predefined amplitude level corresponds to a flow of 25-200 ml/min through the inlet pipe.

In one embodiment, the predefined amplitude level corresponds to a flow of 30-100 ml/min through the inlet pipe.

In one embodiment, the predefined amplitude level corresponds to a flow of 35-80 ml/min through the inlet pipe.

In one embodiment, the predefined amplitude level corresponds to a flow of 45-60 ml/min through the inlet pipe.

In one embodiment, the predefined time period (ΔT) is within the range 10-600 minutes.

In one embodiment, the predefined time period (ΔT) is within the range 15-450 minutes.

In one embodiment, the predefined time period (ΔT) is within the range 30-300 minutes.

In one embodiment the predefined time period (ΔT) is within the range 60-250 minutes.

In one embodiment, the sensor comprises a setting unit, by which the predefined time period (ΔT) and/or the predefined amplitude level can be set and/or changed. Hereby, it is possible to set or change the predefined time period and/or the predefined amplitude level.

In one embodiment, the sensor comprises a setting unit by which the sampling rate of the sensor and/or the frequency with which the sensor sends signals can be set and/or changed.

In one embodiment, the setting unit is remotely accessible. This can be accomplished if the setting unit can be accessed remotely by means of a communication module on the vibration sensor.

In one embodiment, the sensor is electrically powered and comprises a battery.

In one embodiment, the sensor is electrically powered and comprises an energy harvester.

In one embodiment, the system comprises a plurality of vibration sensors each arranged to detect vibration signals caused by water flowing through the inlet pipe or through the water cistern of different toilets. Hereby, it is possible to monitor a plurality of toilets by using the system. The system can be used to monitor all toilets in an office building by way of example. The system can be used to monitor all toilets in the schools of a city by way of example.

In one embodiment, the vibration sensor is attached to the outer surface of the inlet pipe. This position has been found to provide reliable data that can be used to detect a leakage flow.

In one embodiment, the vibration sensor is attached to the outer surface of the inlet pipe made of a bendable material.

In one embodiment, the vibration sensor is attached to the outer surface of the inlet pipe made of plastic or rubber.

In one embodiment, the vibration sensor is attached to the outer surface of the inlet pipe made of metal.

The method according to the invention is a method for detecting a leakage flow of a toilet having a water cistern and an inlet pipe is in fluid communication with the water cistern, wherein the method comprises the following steps:
- arranging a vibration sensor in a position, in which the vibration sensor can detect vibration signals caused by water flowing through the inlet pipe or through the water cistern;
- detecting vibration signals caused by water flowing through the inlet pipe or through the water cistern by means of the vibration sensor;
- determining when no vibration signals below a predefined amplitude level have been detected by the vibration sensor in a predefined time period.

Hereby, it is possible to provide a method, by which it is possible to detect a leakage flow of a toilet that is installed and being used on a regular basis. Moreover, the disadvantage of the prior art solutions can be avoided.

The vibration sensor must be arranged in a position, in which the vibration sensor can detect vibration signals caused by water flowing through the inlet pipe or through the water cistern. Accordingly, the vibration sensor can be attached to:
- the inlet pipe or to a structure attached to the inlet pipe,
- the water cistern or to a structure attached to the water cistern or
- a supply pipe that is in fluid communication with the inlet pipe or to a structure attached to the supply pipe.

The method comprises the step of detecting vibration signals caused by water flowing through the inlet pipe or through the water cistern by means of the vibration sensor. Any suitable type of sensor that is capable of detecting vibrations can be used.

By determining when no vibration signals below a predefined amplitude level has been detected by the vibration sensor in a predefined time period, it is possible to determine if a leakage flow is present.

In one embodiment, the method comprises the step of generating an alert in case that no vibration signals having a vibration amplitude below the predefined amplitude level has been detected by the vibration sensor in the predefined time period. Hereby, it is possible to notify relevant individuals such as service staff.

In one embodiment, the method comprises the step of transmitting signals to an external receiver.

In one embodiment, the method comprises the step of transmitting wireless signals to an external receiver.

The external receiver may be a mobile device. If service staff carry such mobile device, the service staff may be immediately notified if a leakage flow is present.

The external receiver may be a server accessible via the Internet.

In one embodiment, the step of transmitting signals is carried out by means of a communication module that comprises a radio transmitter.

The communication module may be configured to use a low-power wide-area network modulation technique compliant with the so-called LoRaWAN^{®} specification.

In one embodiment, the method comprises the step of receiving signals from an external device. Hereby, it is possible to access the system and set or change one or more parameters such as the predefined time period and/or the predefined amplitude level and/or the sampling rate of the sensor and/or the frequency with which the sensor sends signals.

In one embodiment, the communication module is a LoRa communication module configured to apply a spread spectrum modulation technique derived from chirp spread spectrum technology.

In one embodiment, the vibration sensor applies a satellite-based radio navigation to detect and send its position.

In one embodiment, the vibration sensor comprises a unique identification that is linked to the position of the toilet to which the vibration sensor is installed, wherein the unique identification is included in the signals.

Hereby, it is possible to locate the position of the toilet in which a leakage flow is present.

In one embodiment, the method applies a predefined amplitude level that corresponds to a flow of 5-1000 ml/min through the inlet pipe.

In one embodiment, the predefined amplitude level corresponds to a flow of 10-500 ml/min through the inlet pipe.

In one embodiment, the predefined amplitude level corresponds to a flow of 15-300 ml/min through the inlet pipe.

In one embodiment, the predefined amplitude level corresponds to a flow of 25-200 ml/min through the inlet pipe.

In one embodiment, the predefined time period is within the range 10-600 minutes.

In one embodiment, the predefined time period (ΔT) is within the range 15-450 minutes.

In one embodiment, the predefined time period (ΔT) is within the range 30-300 minutes.

In one embodiment, the predefined time period (ΔT) is within the range 60-250 minutes.

In one embodiment, the method comprises the step of setting and/or changing the predefined time period.

In one embodiment, the method comprises the step of setting and/or changing the predefined amplitude level.

This may be done by using a sensor that comprises a setting unit configured to set and/or change the predefined time period and/or the predefined amplitude level.

In one embodiment, the method comprises the step of setting and/or changing the sampling rate of the sensor.

In one embodiment, the method comprises the step of setting and/or changing the frequency with which the sensor sends signals.

This may be done by using a sensor that comprises a setting unit configured to set and/or change the sampling rate of the sensor and/or the frequency with which the sensor sends signals.

In one embodiment, the method comprises the step of applying a plurality of vibration sensors each arranged to detect vibration signals caused by water flowing through the inlet pipe or through the water cistern of different toilets, wherein the method for each toilet determines when no vibration signals having a vibration amplitude below the predefined amplitude level have been detected by the vibration sensor in the predefined time period. Hereby, it is possible to monitor a plurality of toilets by using the method.

The method can be used to monitor all toilets in an office building by way of example. The method can be used to monitor all toilets in the schools of a city by way of example. The method can be used to monitor all toilets in residential property. The method can be used to monitor all toilets in a block of flats. The method can be used to monitor all toilets in one or more apartment houses.

### Description of the Drawings

The invention will become more fully understood from the detailed description given herein below. The accompanying drawings are given by way of illustration only, and thus, they are not limitative of the present invention. In the accompanying drawings:
- Fig. 1: shows a schematic view of a system according to the invention;
- Fig. 2: shows a schematic view of another system according to the invention;
- Fig. 3A: shows a schematic view of a vibration sensor according to a system of the present invention before the sensor is attached to an inlet pipe of a toilet;
- Fig. 3B: shows another view of the vibration sensor shown in Fig. 3A;
- Fig. 3C: shows a view of the vibration sensor shown in Fig. 3A and Fig. 3B in a configuration, in which the sensor has been attached to the inlet pipe;
- Fig. 3D: shows the vibration sensor shown in Fig. 3C in a configuration, in which holding structures have been attached to the sensor to improve the attachment to the inlet pipe;
- Fig. 4A: shows a schematic, cross-sectional view of a vibration sensor according to a system of the present invention that is attached to an inlet pipe of a toilet by means of a first mounting element;
- Fig. 4B: shows a schematic, cross-sectional view of a vibration sensor according to a system of the present invention that is attached to an inlet pipe of a toilet by means of a second mounting element;
- Fig. 4C: shows a schematic, cross-sectional view of a vibration sensor according to a system of the present invention that is attached to an inlet pipe of a toilet by means of a third mounting element;
- Fig. 5: shows a graph depicting the flow of water leaving a toilet as function of time;
- Fig. 6: shows a graph depicting the flow of water leaving a toilet as function of time, wherein a system according to the invention is used to detect if there is a leakage flow;
- Fig. 7: shows a first graph depicting vibration signals (caused by flow of water leaving a toilet) detected by means of a system according to the invention as function of time;
- Fig. 8: shows a second graph depicting vibration signals (caused by flow of water leaving a toilet) detected by means of a system according to the invention as function of time;
- Fig. 9: shows a first graph depicting vibration signals (caused by flow of water leaving a toilet) detected by means of a system according to the invention as function of time;
- Fig. 10: shows a second graph depicting vibration signals (caused by flow of water leaving a toilet) detected by means of a system according to the invention as function of time;
- Fig. 11: shows a flow chart illustrating the main principles of a method according to the invention;
- Fig. 12A: shows a plurality of sensors each being arranged to detect a leakage flow of a toilet;
- Fig. 12B: shows a map indicating the location of buildings, in which one or more sensors are arranged to detect a leakage flow of one or more toilets;
- Fig. 13A: shows a schematic view of a system according to the invention and
- Fig. 13B: shows a schematic view of another system according to the invention.

### Detailed description of the invention

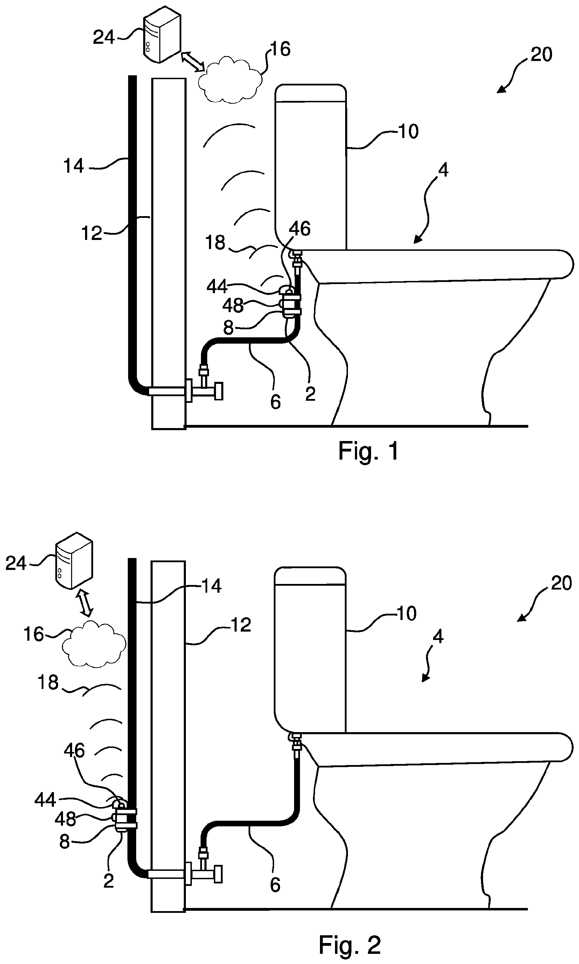

Referring now in detail to the drawings for the purpose of illustrating preferred embodiments of the present invention, a system of the present invention is illustrated in Fig. 1.

Fig. 1 illustrates a schematic view of a system 20 according to the invention. The system 20 is a system 20 for detecting a leakage flow of a toilet 4 having a water cistern 10 and an inlet pipe 6 that is in fluid communication with the water cistern 10. The system comprises a vibration sensor 2 that is mounted on an inlet pipe 6 of a toilet 4. The sensor 2 is attached to and mechanically connected to the outside of the inlet pipe 6 of the toilet 4.

The inlet pipe 6 is in fluid communication with the water cistern 10. Accordingly, the flow detected by the vibration sensor 2 corresponds to the flow of water leaving the water cistern 10 and thus the flow of water leaving the toilet 4. The vibration sensor 2 is arranged in a position, in which the vibration sensor 2 can detect vibration signals caused by water flowing through the inlet pipe 6 and/or through the water cistern 10.

The system 20 comprises a computer unit 24 arranged and configured to receive data from the vibration sensor 2. The computer unit 24 is provided as a unit that is separated from the vibration sensor 2. The vibration sensor 2 is, however, communicatively connected to the computer unit 24. In an alternative embodiment, the computer unit 24 is integrated in the vibration sensor 2.

The vibration sensor 2 comprises a communication module 44 configured to transmit wireless signals 18. In one embodiment, the communication module 44 comprises a radio-frequency module that is configured to transmit and optionally receive radio signals 18.

The vibration sensor 2 comprises a satellite-based radio navigation unit 46.

The vibration sensor 2 comprises a setting unit 48. By means of the setting unit 48 the predefined time period (ΔT) and/or the predefined amplitude level can be set and/or changed. The setting unit 48 can also be used to set and/or changed the sampling rate of the vibration sensor 2 and/or the frequency with which the vibration sensor 2 sends signals 18.

In one embodiment, the communication module 44 is a long range communication module 44 configured to apply a spread spectrum modulation technique derived from chirp spread spectrum technology.

The computer unit 24 is configured to determine when no vibration amplitude below a predefined amplitude level has been detected by the vibration sensor 2 in a predefined time period. The predefined time period may by way of example be 4 hours. By selecting a long, predefined time period, the risk for generating a false alert is reduced. However, by selecting a short, predefined time period, the likelihood for generating an alert is increased. In practice, one has to consider the activity of a toilet to set the most optimal predefined time period. In principle, the value of the predefined time period should depend on the expected degree of usage of the toilet.

In one embodiment, the system applies a predefined time period that depends on the time. Accordingly, there is a diurnal variation with respect to the predefined time period. In one embodiment, the predefined time period has a first value during the opening hours of a building and a second predefined time period value during the remaining hours (the closing hours of a building).

The signals 18 sent by the sensor 2 are sent via the Internet 16. Since the computer unit 24 is connected to the Internet 16, the signals 18 are received by the computer unit 24 via a connection to the Internet 16.

In an alternative embodiment, the computer unit 24 is configured to directly receive the signals 18 transmitted by the sensor 2.

The inlet pipe 6 is in fluid communication with a water supply pipe 14. The water supply pipe 14 is connected to a connection structure, to which the inlet pipe 6 is connected. The water supply pipe 14 extends along a wall 12. The inlet pipe 6 and the water supply pipe 14 are provided on different sides of the wall 12.

Fig. 2 illustrates a schematic view of a system 20 according to the invention. The system 20 basically corresponds to the one shown in and explained with reference to Fig. 1. The sensor 2, however, is mounted on the water supply pipe 14 and not on the inlet pipe 6 as in Fig. 1.

It is possible to attach the sensor 2 in any position, in which the vibration sensor 2 can detect vibration signals caused by water flowing through the inlet pipe 6 or through the water cistern 10. In one embodiment, the sensor 2 is attached to the water cistern 10. In one embodiment, the sensor 2 is attached to another part of the toilet 4.

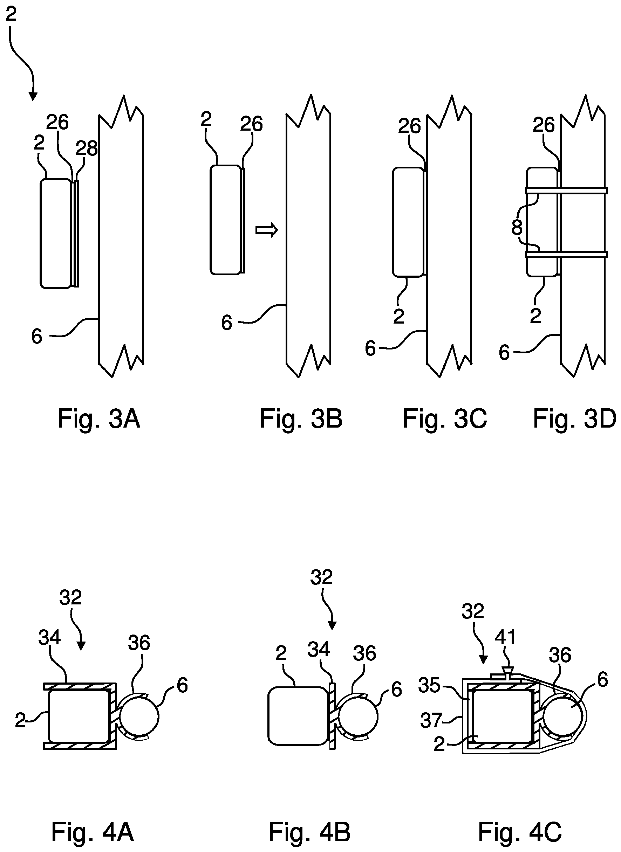

Fig. 3A illustrates a schematic view of a vibration sensor 2 according to a system of the present invention before the vibration sensor 2 is attached to an inlet pipe 6 of a toilet. The vibration sensor 2 comprises a housing having a contact surface that is provided with an adhesive layer 26. A protective foil 28 is attached to the outside surface of the adhesive layer 26 in order to protect the adhesive layer 26. Before the vibration sensor 2 is attached to a structure such as the inlet pipe 6 illustrated in Fig. 3A, the protective foil 28 is peeled off. In one embodiment, the contact surface of the housing has a geometry that matches the outside geometry of the structure (e.g. the inlet pipe 6), to which the vibration sensor 2 is intended to be attached.

Fig. 3B illustrates another view of the vibration sensor 2 shown in Fig. 3A. In this configuration, the protective foil 28 (shown in Fig. 3A) has been peeled off. Accordingly, the adhesive layer 26 is ready to be attached to the inlet pipe 6 in order to attach the vibration sensor 2 to the inlet pipe 6.

Fig. 3C illustrates a view of the sensor shown in Fig. 3A and Fig. 3B in a configuration, in which the vibration sensor 2 has been attached to the inlet pipe 6. The adhesive layer 26 has now been brought into contact with the outside portion of the inlet pipe 6.

Fig. 3D illustrates the vibration sensor 2 shown in Fig. 3C in a configuration, in which holding structures 8 have been attached to the vibration sensor 2 to improve the attachment of the vibration sensor 2 to the inlet pipe 6. In one embodiment, the holding structures 8 are shaped as cable ties. In one embodiment, the holding structures 8 are shaped as elastic bands or straps. In one embodiment, a single holding structure 8 is used.

In one embodiment, several holding structures 8 are used to secure the vibration sensor 2 to the inlet pipe 6 (or alternatively another structure such as a water cistern of a toilet or a water supply pipe that is in fluid communication with the inlet pipe 6 or the water cistern of a toilet).

Fig. 4A illustrates a schematic, cross-sectional view of a vibration sensor 2 according to a system of the present invention that is attached to an inlet pipe 6 of a toilet by means of a first mounting element 32. The first mounting element 32 comprises an attachment structure 34 that is shaped to receive and maintain the housing of the vibration sensor 2. The attachment structure 34 is basically box-shaped and comprises an opening provided in the distal end of the attachment structure 34. Hereby, the vibration sensor 2 can be inserted into the attachment structure 34 through the opening.

The attachment structure 34 comprises a closing plate provided in the proximal end of the attachment structure 34. The mounting element 32 comprises a clamping member 36 attached to and protruding from the closing plate of the attachment structure 34. The clamping member 36 is shaped to be attached to a cylindrical structure such as the inlet pipe 6. The clamping member 36 comprises mounting arms arranged and configured to bear against a cylindrical portion and hereby fix the mounting element 32 to the cylindrical portion.

In one embodiment, the clamping member 36 is designed to detachably attach the mounting element 32 to a cylindrical structure such as the inlet pipe 6.

Fig. 4B illustrates a schematic, cross-sectional view of a vibration sensor 2 according to a system of the present invention that is attached to an inlet pipe 6 of a toilet by means of a second mounting element 32.

The second mounting element 32 comprises an attachment structure 34 that is shaped to be attached to the housing of the vibration sensor 2. The attachment structure 34 comprises an end plate corresponding to the closing plate of the attachment structure 34 shown in Fig. 4A.

The mounting element 32 is provided with a clamping member 36 corresponding to the one that is shown in and explained with reference to Fig. 4B.

Fig. 4C illustrates a schematic, cross-sectional view of a vibration sensor 2 according to a system of the present invention that is attached to an inlet pipe 6 of a toilet by means of a third mounting element 32.

The third mounting element 32 corresponds to the one shown in and explained with reference to Fig. 4A. The third mounting element 32, however, comprises two additional structures: a support structure 35 shaped as a pate that abuts the distal end of the housing of the vibration sensor 2 and an elastic strap 37 comprising a fixation structure 41 for attaching to the ends of the elastic strap 37 to each other. When the elastic strap 37 is mounted, the elastic strap 37 presses the third mounting element 32 towards the inlet pipe 6. Moreover, the elastic strap 37 presses the support structure 35 towards the housing of the vibration sensor 2 and hereby prevents that the vibration sensor 2 falls out of the third mounting element 32.

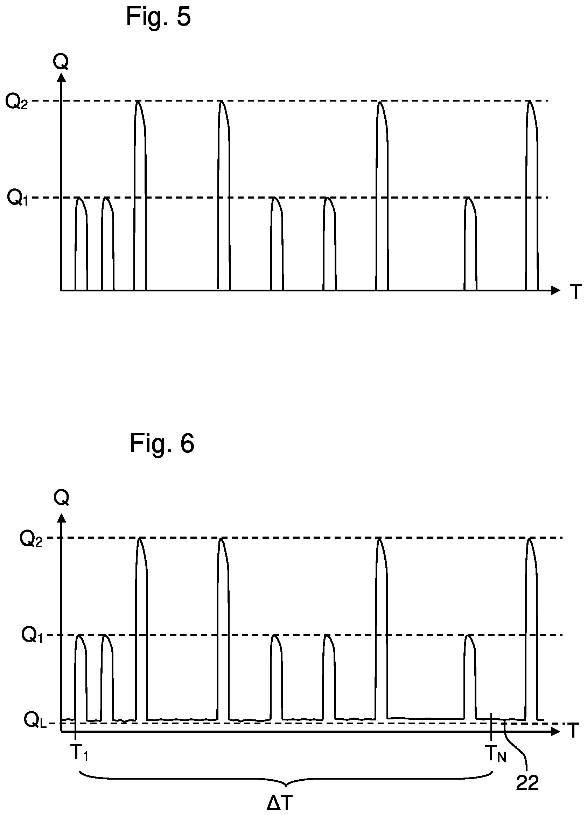

Fig. 5 illustrates a graph depicting the flow Q of water leaving a toilet as function of time T. It can be seen that the flow Q of water is zero in some time periods and that the flow Q of water is non-zero in the remaining time periods. The periods in which the flow is non-zero represents the time periods after flushing the toilet.

Since the toilet has two levels of flushing, some of the non-zero flows of water correspond to a first flow value Q₁, while the remaining non-zero flows of water correspond to a second higher flow value Q₂.

Fig. 6 illustrates a graph depicting the flow Q of water leaving a toilet as function of time, wherein a system according to the invention is used to detect if there is a leakage flow. The system detects the flow of water leaving the toilet several times from a first point in time T₁ to a late point in time T_{N}. During this predefined time period ΔT, no flow measurement is below the predefined flow level Q_{L} (indicated by a dotted line). Accordingly, the system according to the invention generated an alert. On the other hand, if one or more of the flow measurements had been below the predefined flow level Q_{L}, the system would not have generated an alert.

When looking at the graph shown in Fig. 6 one can see that a non-zero leakage flow 22 is present between the time periods, in which a first non-zero flow value Q₁ or a second higher non-zero flow value Q₂ is present. If there was no leakage flow 22, one would expect the flow Q to fall below the predefined flow level Q_{L}.

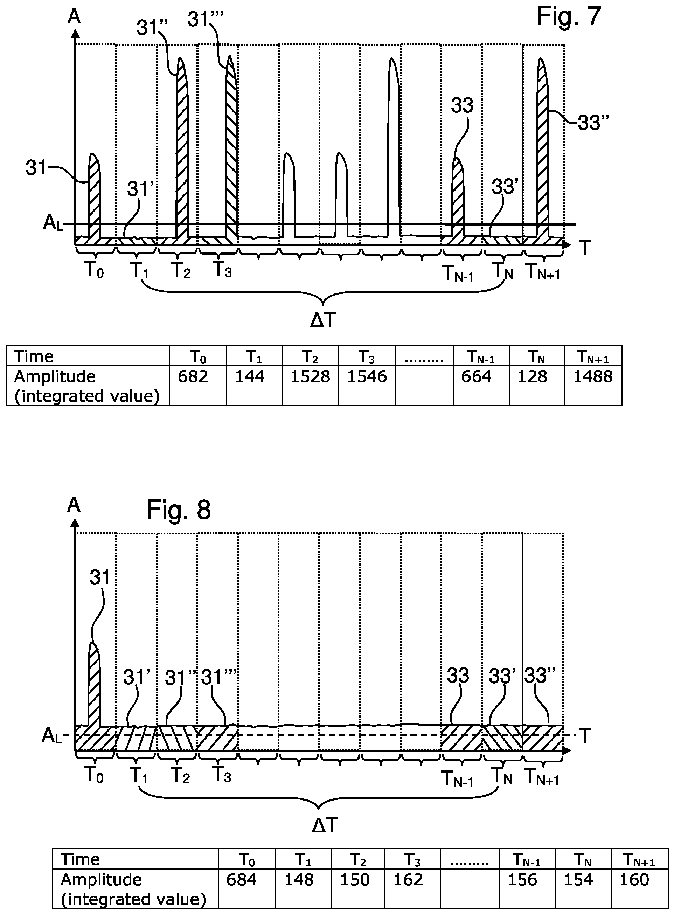

Fig. 7 illustrates a first graph depicting the amplitude of vibration signals caused by flow of water leaving a toilet as function of time. These vibration signals are detected by means of a system according to the invention. The system according to the invention integrates the amplitudes of vibration signals in a number of time periods of equal duration. The duration may be selected in any manner that provides useable measurements. In one embodiment, the duration is 10 minutes. In one embodiment, the duration is 8 minutes. In one embodiment, the duration is 5 minutes. In one embodiment, the duration is 4 minutes. In one embodiment, the duration is 2 minutes.

In one embodiment, the duration is 1 minute. In one embodiment, the duration is 45 seconds. In one embodiment, the duration is 30 seconds. In one embodiment, the duration is 20 seconds. In one embodiment, the duration is 15 seconds. In one embodiment, the duration is 10 seconds. In one embodiment, the duration is 8 seconds. In one embodiment, the duration is 5 seconds. In one embodiment, the duration is 3 seconds. In one embodiment, the duration is 2 seconds. In one embodiment, the duration is 1 second. In one embodiment, the duration is 0.5 seconds. In one embodiment, the duration is 0.2 second. In one embodiment, the duration is 0.1 seconds.

Below the graph a table is shown. The table shows the amplitude A (integrated values) for a plurality of time periods T₀, T₁, T₂, T₃, T_{N-1}, T_{N}, T_{N+1} indicated in the graph.

During a first measurement period T₀, a non-zero local peak vibration signal 31 is detected. The integrated value for the first measurement period T₀ is 682.

The sensor may deliver the measurements as electrical values. These values may be amplified and filtered if desired.

During a next measurement period T₁, a significantly lower non-zero vibration signal 31' is detected. The integrated value for this measurement period T₁ is 144.

During a next measurement period T₂, a non-zero vibration signal 31" is detected. The integrated value for this measurement period T₂ is 1528. During a next measurement period T₃, a significantly lower non-zero vibration signal 31‴ is detected. The integrated value for this measurement period T₃ is 1546.

During a next measurement period T_{N-1}, a non-zero vibration signal 33 is detected. The integrated value for this measurement period T_{N-1} is 664.

During a next measurement period T_{N}, a non-zero vibration signal 33' is detected. The integrated value for this measurement period T_{N} is 128. During a next measurement period T_{N+1}, a non-zero vibration signal 33" is detected. The integrated value for this measurement period T_{N+1} is 1488.

On the basis of these measurements, the system according to the invention performs a test to determine if there is a leakage flow. The test comprises the step of determining whether or not a vibration amplitude A below a predefined amplitude level A_{L} (indicated by a dotted line) has been detected by the vibration sensor of the system during the predefined time period ΔT.

Since the amplitude A has been below the predefined amplitude level A_{L} during the predefined time period ΔT, the system determines that there is no leakage flow.

Fig. 8 illustrates a second graph depicting the amplitude of vibration signals caused by flow of water leaving a toilet as a function of time. These vibration signals are detected by means of a system according to the invention. The system according to the invention integrates the amplitude of vibration signals in a number of time periods of equal duration.

Below the graph a table is shown. The table shows the amplitude A (integrated values) for a plurality of time periods T₀, T₁, T₂, T₃, T_{N-1}, T_{N}, T_{N+1} indicated in the graph.

During a first measurement period T₀, a non-zero local peak vibration signal 31 is detected. The integrated value for the first measurement period T₀ is 684.

During a next measurement period T₁, a significantly lower non-zero vibration signal 31' is detected. The integrated value for this measurement period T₁ is 148.

During a next measurement period T₂, a significantly lower non-zero vibration signal 31" is detected. The integrated value for this measurement period T₂ is 150.

During a next measurement period T₃, a non-zero vibration signal 31‴ is detected. The integrated value for this measurement period T₃ is 162.

During a next measurement period T_{N-1}, a non-zero vibration signal 33 is detected. The integrated value for this measurement period T_{N-1} is 156.

During a next measurement period T_{N}, a non-zero vibration signal 33' is detected. The integrated value for this measurement period T_{N} is 154.

During a next measurement period T_{N+1}, a non-zero vibration signal 33" is detected. The integrated value for this measurement period T_{N+1} is 160.

On the basis of these measurements, the system according to the invention performs a test to determine if there is a leakage flow by determining whether or not no vibration amplitude A below a predefined amplitude level A_{L} (indicated by a dotted line) has been detected by the vibration sensor of the system during the predefined time period ΔT.

Since the amplitude A has not been below the predefined amplitude level A_{L} during the predefined time period ΔT, the system determines that there is a leakage flow.

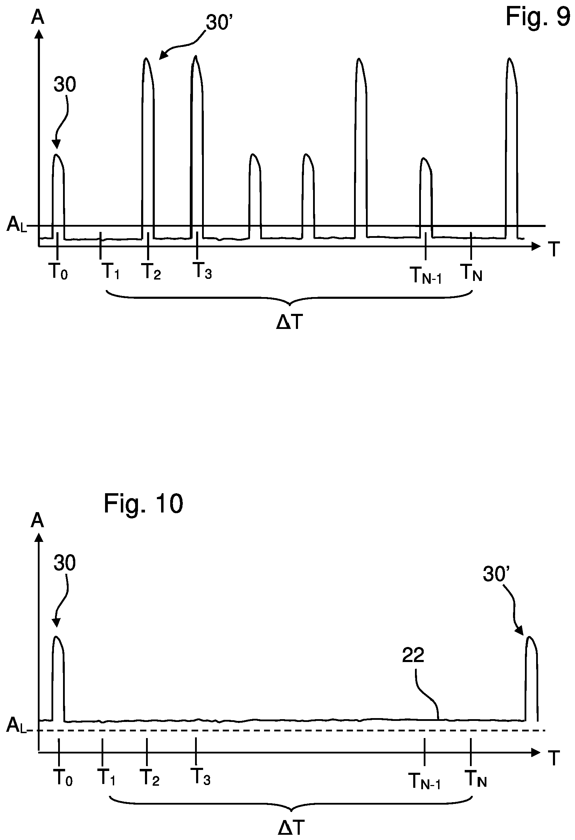

Fig. 9 illustrates a first graph depicting vibration signals 30, 30' (caused by flow of water leaving a toilet) detected by means of a system according to the invention as function of time. Instead of integrating measurement values of several time periods, only a single measurement is performed for the flowing times T₀, T₁, T₂, T₃, T_{N-1}, T_{N} as indicated in the graph.

Since some of the vibration signals (e.g. the one at time T₁ and T_{N}) have a value below the predefined amplitude level A_{L} during the predefined time period ΔT, the system determines that there is no leakage flow.

Fig. 10 illustrates a second graph depicting vibration signals 30, 30' (caused by flow of water leaving a toilet) detected by means of a system according to the invention as function of time. A single measurement is performed for the flowing times T₀, T₁, T₂, T₃, T_{N-1}, T_{N} as indicated in the graph.

Since none of the vibration signals 30, 30' have a value below the predefined amplitude level A_{L} during the predefined time period ΔT, the system determines that there is a leakage flow 22.

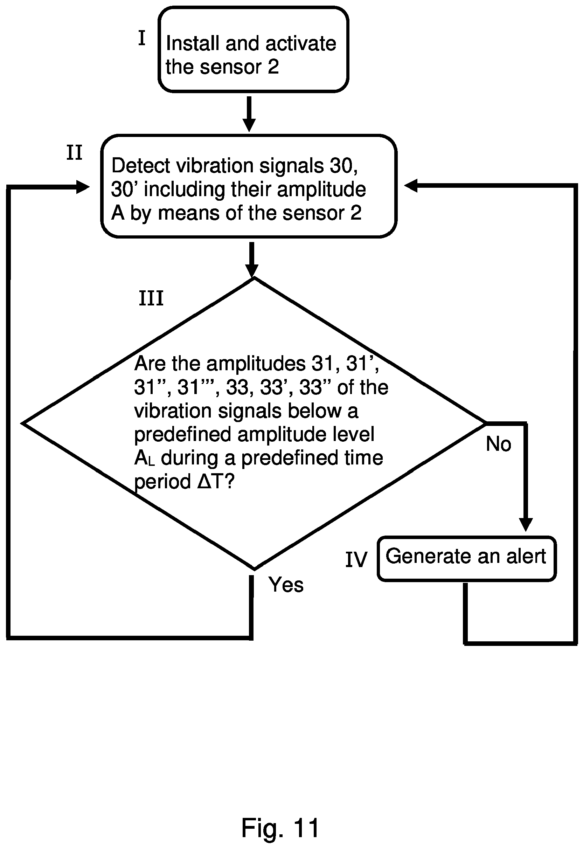

Fig. 11 illustrates a flow chart illustrating the main principles of a method according to the invention.

In the first step I, a vibration sensor 2 is installed and activated. In one embodiment, the vibration sensor 2 is attached to an inlet pipe that is in fluid communication with a water cistern of a toilet. In one embodiment, the vibration sensor 2 is attached to a supply pipe that is in fluid communication with an inlet pipe that is in fluid communication with a water cistern of the toilet. In one embodiment, the vibration sensor 2 is attached to a water cistern of the toilet.

It is important to note that a vibration sensor 2 may be installed on several toilets in one or more buildings.

When the one or more vibration sensors 2 are installed, the one or more vibration sensors 2 are activated so that they perform vibration measurements with a predefined frequency (sampling rate).

In the second step, II, vibration signals 30, 30' and their amplitude A are detected by means of the at least one sensor 2. The measurements may be conducted in several manners.

In one embodiment, the measurements are conducted on a continuous basis and the data are sent to a computer unit (e.g. a processor) for further processing.

In one embodiment, the data are stored temporarily. In this embodiment, the data sent to the computer unit represents a plurality of measurements.

In one embodiment, the data are integrated and stored as an integrated value representing a time period, during which several measurements have been carried out. In this embodiment, data integrated during the time period are sent to the computer unit as integrated data.

In the third step, III, it is determined whether or not the amplitudes 31, 31', 31", 31"', 33, 33', 33" of the vibration signals are below a predefined amplitude level A_{L} during a predefined time period ΔT.

If, during the third step III, it is determined that at least one of the amplitudes 31, 31', 31", 31‴, 33, 33', 33" of the vibration signals are below a predefined amplitude level A_{L} during a predefined time period ΔT, step II is repeated.

If, on the other hand, during the third step III, it is determined that none of the amplitudes 31, 31', 31", 31‴, 33, 33', 33" of the vibration signals are below a predefined amplitude level A_{L} during a predefined time period ΔT, an alert is generated as shown in step IV. After this, step II is repeated.

The generation of an alert may include that one or more notifications are sent to one or more individuals. In one embodiment, the position of the toilet that has a leakage flow is included in the alert. This can be done if the signals sent from the sensor 2 includes information that can be used to determine the location of the toilet. In one embodiment, the position of all sensors 2 is listed in a database, wherein a unique identification is assigned to each sensor 2. Accordingly, the position /location of each sensor 2 can be established by the unique identification. Accordingly, service staff can be informed so that the leakage flow can be stopped e.g. by repairing the toilet or replacing the toilet with a new toilet.

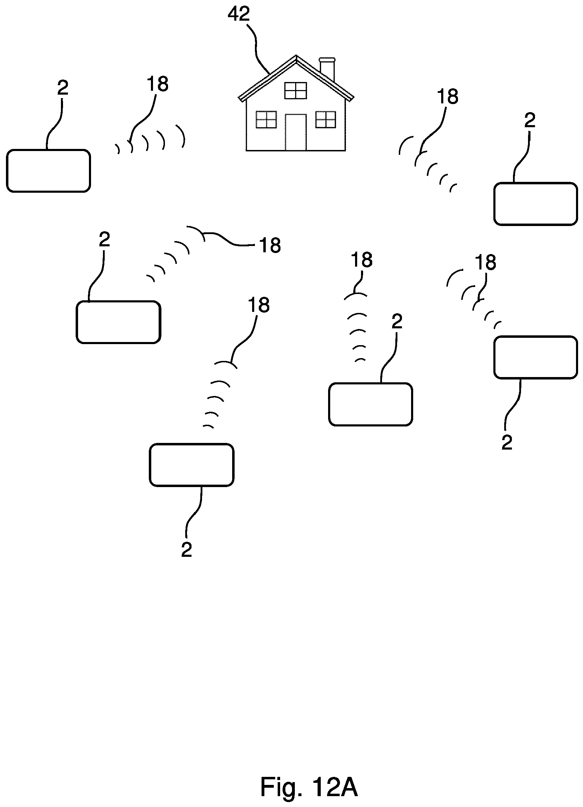

Fig. 12A illustrates a plurality of sensors 2 each being arranged to detect a leakage flow of a toilet. All sensors 2 comprise a communication module allowing the sensor 2 to send wireless signals 18 including the measurements made by the sensor 2 as well as a position or a unique identification that can be used to determine the position of the toilet (e.g. by using a predefined database, in which the positions of all toilets are saved together with a unique identification).

The sensors 2 send wireless signals 18 to an office 42 or alternatively a server that is accessible from the office 42. Hereby, it is possible to monitor all sensors 2 from the office 42. If an alert is generated, this will be communicated to the office 42. Accordingly, any predefined action can be initiated.

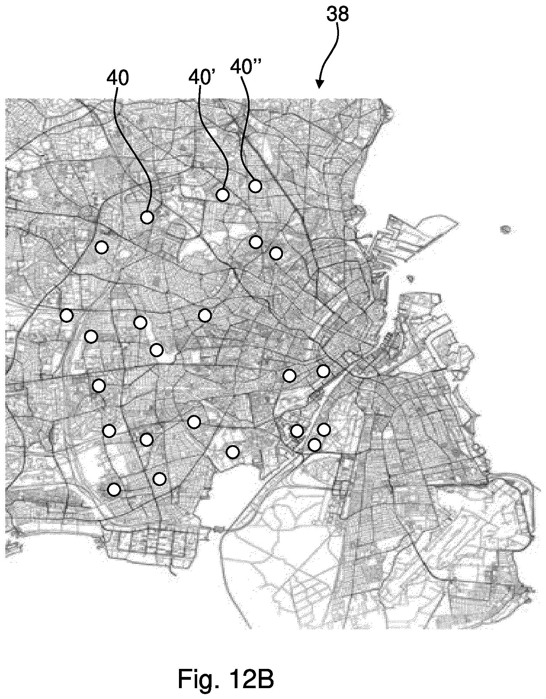

Fig. 12B illustrates a map 38 indicating the location 40, 40', 40 of buildings, in which one or more sensors are arranged to detect a leakage flow of one or more toilets.

The system according to the invention can be used to monitor an area of a state, an entire city or an area of a city.

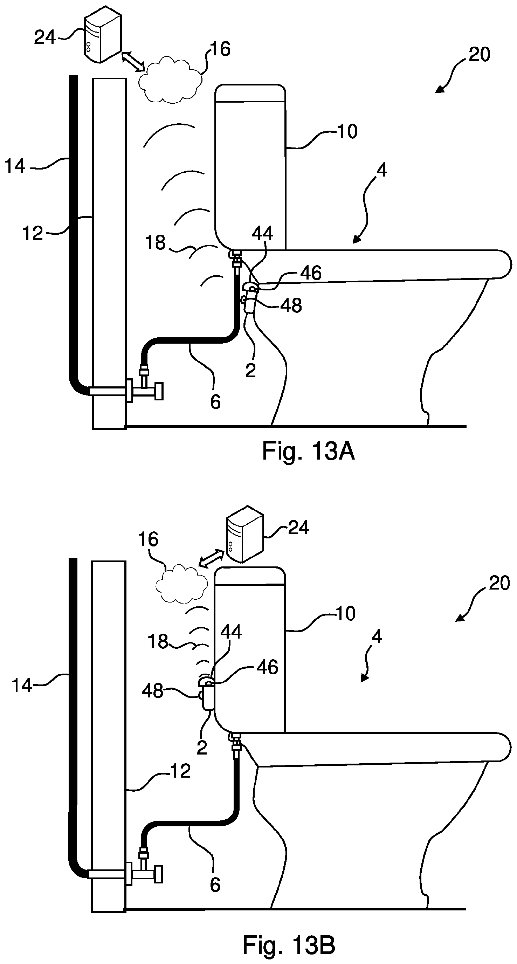

Fig. 13B illustrates a schematic view of a system 20 according to the invention. The system 20 basically corresponds to the one shown in and explained with reference to Fig. 1. The sensor 2, however, is mounted on the water cistern 10 and not on the inlet pipe 6 as in Fig. 1.

It is possible to attach the sensor 2 in any position on the water cistern 10 provided that the vibration sensor 2 can detect vibration signals caused by water flowing through the inlet pipe 6 or through the water cistern 10.

Fig. 13A illustrates a schematic view of a system 20 according to the invention. The system 20 basically corresponds to the one shown in and explained with reference to Fig. 13B. The sensor 2, however, is mounted on the outside of the toilet bowl.

It is possible to attach the sensor 2 in any position on the toilet bowl provided that the vibration sensor 2 can detect vibration signals caused by water flowing through the inlet pipe 6 or through the water cistern 10.

### List of reference numerals

- 2: Sensor
- 4: Toilet
- 6: Inlet pipe
- 8: Holding structure
- 10: Water cistern
- 12: Wall
- 14: Water supply pipe
- 16: Internet
- 18: Wireless signal
- 20: System
- 22: Leakage flow
- 24: Computer unit
- 25: Amplitude
- 26: Adhesive layer
- 28: Protective foil
- 30, 30': Vibration signal
- 31, 31', 31", 31'": Vibration signal
- 33, 33': Vibration signal
- 32: Mounting element
- 34: Attachment structure
- 35: Support structure
- 36: Clamping member
- 37: Elastic strap
- 38: Map
- 40, 40', 40": Building
- 41: Fixation structure
- 42: Office
- 44: Communication module
- 46: Satellite-based radio navigation unit
- 48: Setting unit
- T₀, T₁, T₂, T₃: Time
- T_{N-1}, T_{N}, T_{N+1}: Time
- T: Time
- ΔT: Time period
- Q, Q₁, Q₂: Flow
- Q_{L}: Flow level
- A: Amplitude
- A_{L}: Amplitude level
- I, II, III, IV: Step

## Claims

1. A system (20) for detecting a leakage flow (22) of a toilet (4) having a water cistern (10) and an inlet pipe (6) that is in fluid communication with the water cistern (10), wherein the system (20) comprises:
- a vibration sensor (2) arranged in a position, in which the vibration sensor (2) can detect vibration signals (30, 30') caused by water flowing through the inlet pipe (6) or through the water cistern (10);
- a computer unit (24) arranged and configured to receive data from the vibration sensor (2),
**characterised in that** the computer unit (24) is configured to determine when no vibration amplitude (A) below a predefined amplitude level (A_{L}) has been detected by the vibration sensor (2) in a predefined time period (ΔT).

2. A system (20) according to claim 1, **characterised in that** the vibration sensor (2) comprises a communication module (44) configured to transmit (preferably wireless) signals (18) to an external receiver.

3. A system (20) according to claim 2, **characterised in that** the vibration sensor (2) comprises:
a) a satellite-based radio navigation unit (46) or
b) a unique identification that is linked to the position of the toilet (4) to which the vibration sensor (2) is installed.

4. A system (20) according to one of the preceding claims, **characterised in that** the predefined amplitude level (A_{L}) corresponds to a flow of 5-1000 ml/min through the inlet pipe (6).

5. A system (20) according to one of the preceding claims, **characterised in that** the predefined time period (ΔT) is within the range 10-600 minutes.

6. A system (20) according to one of the preceding claims, **characterised in that** the sensor (2) comprises a setting unit (48), by which the predefined time period (ΔT) and/or the predefined amplitude level (A_{L}) can be set and/or changed.

7. A system (20) according to one of the preceding claims, **characterised in that** the sensor (2) comprises a setting unit (48) by which the sampling rate of the sensor (2) and/or the frequency with which the sensor (2) sends signals (18) can be set and/or changed.

8. A system (20) according to one of the preceding claims, **characterised in that** the system (20) comprises a plurality of vibration sensors (2) each arranged to detect vibration signals caused by water flowing through the inlet pipe (6) or through the water cistern (10) of different toilets (4).

9. A method for detecting a leakage flow (22) of a toilet (4) having a water cistern (10) and an inlet pipe (6) in fluid communication with the water cistern (10), wherein the method comprises the following steps:
- arranging a vibration sensor (2) in a position, in which the vibration sensor (2) can detect vibration signals caused by water flowing through the inlet pipe (6) or through the water cistern (10);
- detecting vibration signals caused by water flowing through the inlet pipe (6) or through the water cistern (10) by means of the vibration sensor (2);
- determining when no vibration signals (30) having a vibration amplitude (A) below a predefined amplitude level (A_{L}) have been detected by the vibration sensor (2) in a predefined time period (ΔT).

10. A method according to claim 9, wherein the method comprises the step of generating an alert in case that no vibration signals (30) having a vibration amplitude (A) below the predefined amplitude level (A_{L}) have been detected by the vibration sensor (2) in the predefined time period (ΔT).

11. A method according to claim 9 or 10, wherein the method comprises the step of transmitting signals (18) to an external receiver.

12. A method according to claim 11, wherein the vibration sensor (2):
a) applies a satellite-based radio navigation to detect and send its position or
b) comprises a unique identification that is linked to the position of the toilet (4) to which the vibration sensor (2) is installed, wherein the unique identification is included in the signals (18).

13. A method according to one of the preceding claims 9-12, **characterised in that** the method applies a predefined amplitude level (A_{L}) that corresponds to a flow of 5-1000 ml/min through the inlet pipe (6).

14. A method according to one of the preceding claims 9-13, **characterised in that** the predefined time period (ΔT) is within the range 10-600 minutes.

15. A method according to one of the preceding claims 9-14, **characterised in that** the method comprises the step of setting and/or changing the predefined time period (ΔT) and/or the predefined amplitude level (A_{L}).
